# FASCICULE DE BREVET EUROPEEN

(11) **EP 2 325 608 B1**
(45) Date de publication et mention de la délivrance du brevet: **02.05.2018**
(21) Numéro de dépôt: 10191935.5
(22) Date de dépôt: 19.11.2010
(51) Int. Cl.: G01C 23/00, G01S 19/36, G01S 19/47, G01S 19/35

(54) **Système de navigation inertie/gnss**
Trägheits/GNSS-Navigationssystem
Inertial/GNSS navigation system

(30) Priorité: 20.11.2009 FR 0958238
(43) Date de publication de la demande: 25.05.2011
(73) Titulaire: Safran Electronics & Defense, 92100 Boulogne-Billancourt (FR)
(72) Inventeur: Goudon, Jean-Claude, 92100 Boulogne-Billancourt (FR); Gavillet, Simon, 92100 Boulogne-Billancourt (FR)
(74) Mandataire: Regimbeau

(56) Documents cités:
- WO-A1-2008/144921
- WO-A1-2008/147232
- FR-A1- 2 901 363
- US-A1- 2005 017 917

## Description

### DOMAINE DE L'INVENTION

Le domaine de l'invention est celui des systèmes de navigation hybride INS/GNSS (de l'anglo-saxon « Inertial Navigation System » et « Global Navigation Satellite System ») associés à des véhicules, typiquement des porteurs aéronautiques.

### ARRIERE PLAN DE L'INVENTION

Le trafic aérien civil impose de plus en plus de contraintes sur la sécurité et la disponibilité des systèmes de navigation. Or les systèmes GNSS, typiquement le système GPS (Global Positioning System), qui deviennent des moyens primaires de navigation dans de plus en plus de phases de vol, posent encore des problèmes de vulnérabilité aux interférences et aux multi-trajets.

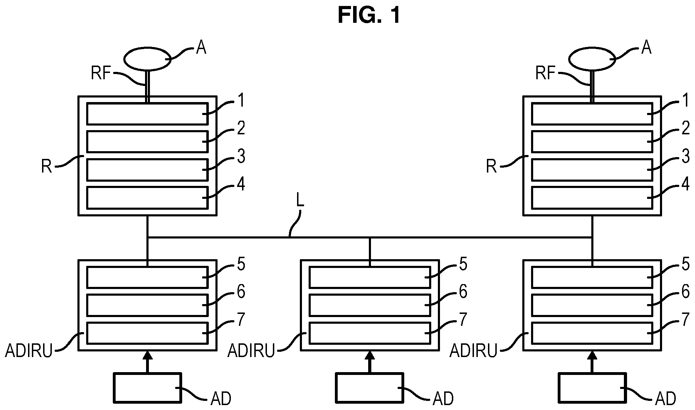

L'architecture aujourd'hui couramment utilisée dans un avion de transport civil est représentée sur la figure 1. Cette architecture repose sur des récepteurs GNSS R qui alimentent chacun trois unités ADIRU (Air Data Inertial Reference Unit) opérant en parallèle de manière redondante afin de délivrer un vecteur d'état de la dynamique de l'avion.

Chacun des récepteurs GNSS R est associé à une antenne GNSS passive A par l'intermédiaire d'un câble radiofréquence RF.

Chaque récepteur GNSS R comprend un module convertisseur-abaisseur 1 qui permet d'abaisser la fréquence du signal GNSS analogique haute fréquence délivré par l'antenne GNSS A, un module de conversion analogique-numérique 2 pour numériser le signal GNSS, un module de traitement 3 configuré pour traiter les signaux GNSS numérisés et délivrer une information de positionnement GNSS de l'avion, et un module d'interface 4 permettant d'adresser cette information de positionnement via une liaison numérique L aux différentes unités ADIRU.

Outre les informations de positionnement GNSS délivrées par les récepteurs GNSS, chaque unité ADIRU reçoit en outre des données issues de capteurs AD de données aérodynamiques (« air data » selon la terminologie consacrée). Ces capteurs AD, typiquement des senseurs anémo-baromètriques, mesurent généralement l'information au plus près de la peau de l'avion.

Chaque unité ADIRU comprend un module d'interface 5, des capteurs inertiels 6 et un module de fusion 7 des données issues des capteurs inertiels avec les informations de positionnement GNSS.

Cette architecture présente les inconvénients suivants.

Les câbles RF nécessaires pour acheminer le signal analogique recueilli par une antenne GNSS A vers un récepteur GNSS R sont souvent très longs (une dizaine de mètres typiquement) et sont assez lourds. Or on cherche d'une manière générale à réduire la masse des différents équipements qui sont intégrés dans un avion.

Cette architecture n'est par ailleurs pas robuste aux phénomènes qui perturbent classiquement les signaux GNSS : interférences intentionnelles et non intentionnelles, multi-trajets. Dans la mesure où ces phénomènes peuvent supprimer la capacité à poursuivre les signaux GNSS, la performance du système de navigation INS/GNSS peut ne plus être disponible, et le véhicule peut alors être dans l'obligation d'annuler ou modifier sa mission.

Les porteurs militaires ont répondu à ce problème en remplaçant les antennes passives par un réseau d'antennes de type CRPA (Controlled Radiation Pattern Antenna) dont les signaux sont recombinés au sein d'un équipement dédié qui réalise une adaptation spatiale et temporelle du diagramme de réception du réseau d'antennes.

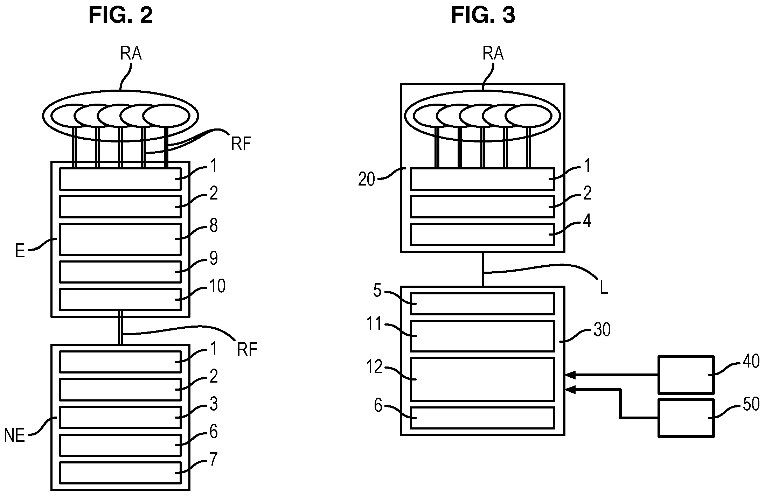

On a représenté sur la figure 2 une chaîne dans laquelle un réseau d'antenne RA délivre des signaux GNSS analogiques par l'intermédiaire de câbles RF à un tel équipement dédié E. Sur cette figure 2, on a repris les mêmes références pour les éléments similaires à ceux déjà présentés sur la figure 1.

L'équipement dédié E comprend un module convertisseur-abaisseur de fréquences 1, un module de conversion analogique-numérique 2, un module de recombinaison 8 des signaux issus de différentes antennes, un module de conversion numérique-analogique 9 et un module convertisseur-élévateur de fréquences 10.

Cet équipement dédié E est relié par l'intermédiaire d'un câble RF à un équipement de navigation INS/GNSS NE doté de capteurs inertiels 6, d'un module convertisseur-abaisseur de fréquences 1 qui permet d'abaisser la fréquence du signal GNSS recombiné analogique haute fréquence délivré par l'équipement dédié E, un module de conversion analogique-numérique 2 pour numériser le signal GNSS recombiné, un module de traitement 3 configuré pour traiter le signal GNSS recombiné numérisé et délivrer une information de positionnement GNSS de l'avion, ainsi qu'un module de fusion 7 des données issues des capteurs inertiels avec les informations de positionnement GNSS.

Sur ces systèmes militaires, on peut trouver de un à trois de ces équipements dédiés E. Or l'ajout de ce type d'équipement est coûteux en terme de masse. Il n'existe en outre actuellement pas de produit équivalent pour l'aéronautique civile.

On connaît par ailleurs du document WO 2008/144921 une antenne GNNS apte à convertir les signaux GNNS sous forme numérique pour transmission à un récepteur GNNS. Ce document prévoit en outre de colocaliser une unité de mesure inertielle avec l'antenne, cette unité de mesure inertielle fournissant des données inertielles à l'antenne sous forme analogique.

Le document FR 2 901 363, quant à lui, décrit un système de détection de données de navigation qui puisse fonctionner avec plusieurs constellations de satellites (GPS, GALILEO...). Ce système de navigation inertielle et GNSS, comprends un ensemble d'unités d'acquisition de données de capteurs GNSS et capteurs inertiels MEMS et ADIRU, ainsi qu'une unité d'hybridation de traitement de données de capteurs configurée pour exploiter les données délivrées par l'ensemble d'unités d'acquisition. L'invention a pour objectif d'améliorer la robustesse des systèmes de navigation civils aux perturbations affectant les signaux GNSS tout en évitant un surcroît de masse.

### BREVE DESCRIPTION DE L'INVENTION

A cet effet, l'invention propose un système de navigation inertie/GNSS associé à un véhicule comprenant :
- un ensemble d'unités d'acquisition de données de capteurs délivrant chacune des données de capteurs sous forme numérique,
- une unité de traitement des données de capteurs (30) configurée pour exploiter les données numériques délivrées par ledit ensemble d'unités d'acquisition et élaborer un vecteur d'état de la dynamique du véhicule,
et dans lequel l'ensemble d'unités d'acquisition de données de capteurs comprend:
∘ une unité d'acquisition et de numérisation de signaux GNSS (20) comprenant une structure d'antenne (RA) configurée pour recevoir des signaux GNSS et un convertisseur analogique-numérique (2) couplé à la structure d'antenne et configuré pour délivrer les signaux GNSS sous forme numérique à l'unité de traitement de données de capteurs
∘ une unité de mesure inertielle (6) intégrée au sein de l'unité de traitement des données de capteurs (30), configurée pour délivrer sous forme numérique à l'unité de traitement de données de capteurs des données inertielles issues de capteurs inertiels.

Certains aspects préférés, mais non limitatifs, de ce système sont les suivants :
- l'ensemble d'unités d'acquisition de données de capteurs comprend en outre une unité d'acquisition et de numérisation de données issues de capteurs de données aérodynamiques, l'unité de traitement des données de capteurs exploitant également lesdites données aérodynamiques pour élaborer le vecteur d'état de la dynamique du véhicule ;
- l'unité de mesure inertielle est intégrée au sein de l'unité de traitement des données de capteurs ;
- l'unité de traitement des données de capteurs est également configurée pour mettre en oeuvre un traitement adaptatif spatio-temporel ou spatio-fréquentiel des signaux GNSS délivrés par le module d'acquisition et de numérisation de signaux GNSS ;
- la structure d'antenne est formée d'un réseau d'antennes à diagramme de rayonnement contrôlable, et l'unité de traitement des données de capteurs est également configurée pour mettre en oeuvre une recombinaison des signaux GNSS issues de chacune des antennes du réseau ;
- l'unité de traitement des données de capteurs utilise en outre les données inertielles délivrées par l'unité de mesure inertielle pour déterminer la direction des satellites observables dans le repère de la structure d'antenne, le gain de la structure d'antenne étant modifiée dans les directions ainsi déterminées ;
- l'unité de traitement des données de capteurs corrige les signaux GNSS délivrés par l'unité d'acquisition et de numérisation de signaux GNSS sur la base de l'incohérence des différences de phase et de pseudo distance entre chaque antenne du réseau ;
- l'unité de traitement des données de capteurs est également configurée pour mettre en oeuvre au moins un traitement d'hybridation des données délivrées par les différentes unités de l'ensemble d'unités d'acquisition de données de capteurs pour élaborer le vecteur d'état de la dynamique du véhicule ;
- le système comprend une pluralité d'unités de traitement des données de capteurs, et l'unité d'acquisition et de numérisation de signaux GNSS délivre les signaux GNSS sous forme numérique à plusieurs unités de la pluralité d'unités de traitement des données de capteurs ;
- le système comprend une pluralité d'unités de traitement des données de capteurs, et l'unité de mesure inertielle délivre les données inertielles à plusieurs unités de la pluralité d'unités de traitement des données de capteurs.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà commentée, est un schéma illustrant l'architecture d'un système de navigation INS/GNSS couramment utilisé aujourd'hui au sein d'un avion civil ;
- la figure 2, déjà commentée, est un schéma illustrant l'architecture d'une chaîne d'un système de navigation INS/GNSS utilisé au sein d'un avion militaire ;
- la figure 3 est un schéma illustrant l'architecture d'une chaîne d'un système de navigation INS/GNSS conforme à un mode de réalisation possible de l'invention ;
- la figure 4 est un schéma illustrant l'échange d'informations entre les différentes chaînes d'un système de navigation INS/GNSS conforme à un mode de réalisation possible de l'invention.

### DESCRIPTION DETAILLEE DE L'INVENTION

L'invention propose un système de navigation inertie/GNSS associé à un véhicule comprenant un ensemble d'unités d'acquisition de données de capteurs, ledit ensemble comportant en particulier une unité d'acquisition et de numérisation de signaux GNSS comprenant une structure d'antenne configurée pour recevoir des signaux GNSS et un convertisseur analogique-numérique couplé à la structure d'antenne et configuré pour délivrer les signaux GNSS sous forme numérique.

L'invention propose ainsi de remplacer les antennes actuelles des systèmes de radio navigation par une structure d'antenne, avantageusement à diagramme de rayonnement contrôlable, associée à des éléments électroniques RF permettant de numériser le signal dans la structure d"antenne et de l'envoyer vers un ou plusieurs équipements multifonctions situés ailleurs dans l'avion. La numérisation du signal reçu est ainsi intégrée à la structure d'antenne, ce qui n'est pas le cas dans les antennes CRPA actuelles utilisées notamment dans les avions militaires où la numérisation s'effectue dans l'équipement dédié E décrit ci-dessus en relation avec la figure 2.

On a représenté sur la figure 3 une chaîne d'un système de navigation INS/GNSS conforme à un mode de réalisation possible de l'invention. Sur cette figure, on a repris les mêmes références pour les éléments similaires à ceux déjà présentés sur les figures 1 et 2. On notera par ailleurs qu'il faut généralement trois ou quatre chaînes identiques dans un avion pour assurer la sécurité et la disponibilité du système en cas de panne.

Comme représenté sur cette figure 3, l'unité d'acquisition et de numérisation de signaux GNSS 30 comprend une structure d'antenne RA configurée pour recevoir des signaux GNSS, un module convertisseur-abaisseur de fréquences 1, un convertisseur analogique-numérique 2 et un module d'interface 4 permettant d'adresser les signaux GNSS numérisés via une liaison numérique L à une ou plusieurs une unité de traitement des données de capteurs 30.

Dans un mode de réalisation préférentiel de l'invention, la structure d'antenne RA est formée par un réseau d'antennes à diagramme de rayonnement contrôlable.

On notera que du fait des progrès récents en terme de miniaturisation des modules convertisseur-abaisseur et convertisseur analogique-numérique, l'unité 20 d'acquisition et de numérisation de signaux GNSS présente un encombrement comparable à celui des antennes passives actuellement utilisées.

L'ensemble d'unités d'acquisition de données de capteurs comprend en outre une unité de mesure inertielle 6 configurée pour délivrer sous forme numérique des données inertielles issues de capteurs inertiels.

Cette unité 6 est typiquement composée au moins de trois gyromètres et de trois accéléromètres.

L'ensemble d'unités d'acquisition de données de capteurs peut également comprendre une unité 40 d'acquisition et de numérisation de données issues de capteurs de données aérodynamiques. Cette unité 40 est typiquement formée de senseurs anémo-barométriques qui numérisent l'information mesurée au plus près de la peau de l'avion.

L'unité de traitement des données de capteurs 30 exploite les données numériques délivrées par ledit ensemble d'unités d'acquisition et élabore un vecteur d'état de la dynamique du véhicule (comprenant typiquement les informations suivantes : position 3D, vitesses 3D, angles d'attitude et de cap, seuils de protection de ces données).

L'unité 30 comprend plus précisément un module d'interface 5, un module 12 assurant, avantageusement au sein d'un même microprocesseur, la recombinaison des signaux GNSS issus des différentes antennes du réseau et les traitements usuels d'un récepteur de signaux RF, ainsi qu'un module 12 de fusion des différentes données de capteurs.

Le module de fusion 12 peut notamment être configuré pour mettre en oeuvre un traitement adaptatif spatio-temporel ou spatio-fréquentiel des signaux GNSS délivrés par l'unité 30 d'acquisition et de numérisation de signaux GNSS. La mise en oeuvre de ce traitement permet d'améliorer la tenue aux interférences, intentionnelles ou non intentionnelles, de la chaîne de radionavigation et ainsi d'accroître la disponibilité de données précises et sécurisées du vecteur d'état de la dynamique du véhicule.

Le module de fusion 12 peut également être configuré pour déterminer la direction des satellites observables dans le repère de la structure d'antenne en exploitant les données inertielles délivrées par l'unité de mesure inertielle 6. Le gain de la structure d'antenne à diagramme de rayonnement contrôlable peut alors être modifié dans les directions ainsi déterminées, ce qui permet d'améliorer la précision des données sécurisées en présence de multi-trajets sur les signaux radio fréquence.

Le module de fusion 12 peut également être configuré pour corriger les signaux GNSS sur la base de l'incohérence des différences de phase et de pseudo distance entre chaque antenne du réseau. Une telle incohérence peut être générée par des réflexions de signaux sur l'environnement externe et le porteur et la correction des signaux GNSS permet alors de minimiser l'impact des multi-trajets.

Le module de fusion 12 peut également être configuré pour mettre en oeuvre au moins un traitement d'hybridation des données délivrées par les différentes unités de l'ensemble d'unités d'acquisition de données de capteurs afin d'élaborer des données optimales et sécurisées du vecteur d'état de la dynamique du véhicule.

On relèvera qu'en plus des capteurs déjà décrits, le module de fusion 12 peut également être relié à une unité 50 d'acquisition et de numérisation de données issues d'autres capteurs externes tels que radio-altimètre, radar-doppler, capteurs optiques (IR, TV, ...), télémètre laser, etc.

Les données optimales sont obtenues par la combinaison des sorties de différents filtres numériques (Filtre de Kalman par exemple) exploitant les mesures issues des différents capteurs disponibles. Des techniques permettent notamment de détecter et exclure des pannes satellites en utilisant la redondance des mesures disponibles. On peut également élaborer des indicateurs de qualité des données obtenues (position, vitesse, attitudes) afin de garantir le niveau d'une erreur avec une probabilité donnée (notion de rayon de protection).

On aura compris que l'invention propose de réaliser toutes les fonctions de traitement des données issues des différents capteurs (structure d'antenne, gyromètres, accéléromètres, senseurs anémo-barométriques) ainsi que la fonction de fusion de ces données élaborées au sein de l'unité de traitement des données de capteurs.

L'utilisation du module d'acquisition et de numérisation de signaux GNSS associée à des algorithmes de traitement de signal adaptés mis en oeuvre au sein de l'unité de traitement de données de capteurs permet un gain en terme de sécurité (diminution de 20 à 30 dB de la vulnérabilité aux interférences, réduction de la vulnérabilité aux multi-trajets) et un gain de masse évident.

Par ailleurs, dans la mesure où les données transmises par les unités ensemble d'acquisition de données de capteurs sont numériques, une unité de traitement des données de capteurs peut recevoir les données issues d'une ou plusieurs autres chaines afin de réaliser des fonctions de surveillance et/ou des fonctions de consolidation / reconfiguration optimale multi-chaines améliorant la disponibilité et la sécurité du système.

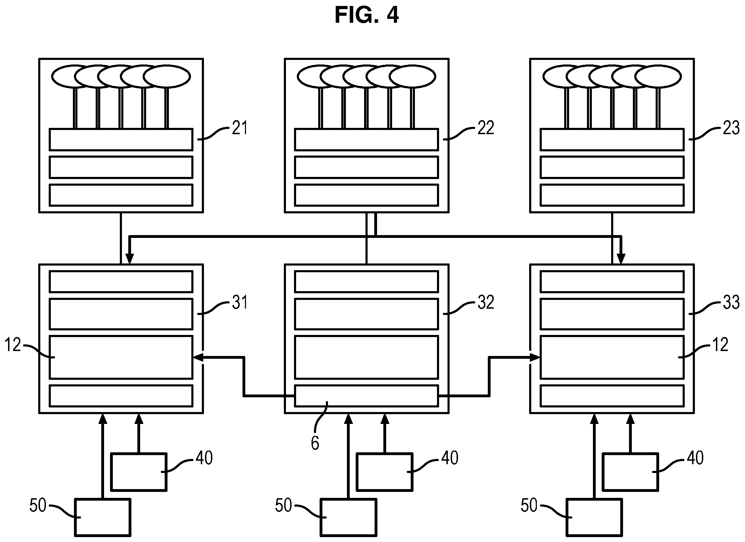

Cet échange d'informations entre trois chaînes est représenté sur la figure 4 sous la forme de traits gras. Sur cette figure 4, l'unité d'acquisition et de numérisation de signaux GNSS 22 de la chaîne centrale transmet ses données à trois unités de traitement de données de capteurs 31, 32, 33. L'unité de mesure inertielle 6 de la chaîne centrale transmet également ces données aux trois unités de traitement de données de capteurs.

Comme présenté précédemment, une unité de mesure inertielle 6 n'est pas nécessairement intégrée au sein d'une unité de traitement des données de capteurs 31, 32, 33, mais peut constituer une unité distincte moins encombrante, par exemple déportée à proximité du centre de gravité du véhicule. On peut ainsi envisager le cas où l'une au moins des trois unités de mesure inertielle de la figure 4 constituerait une unité distincte, déportée des unités de traitement de données de capteurs, configurée pour délivrer ses données inertielles à l'une ou plusieurs des unités de traitement de données de capteurs 31, 32, 33.

## Revendications

1. Système de navigation inertie/GNSS associé à un véhicule comprenant :
- un ensemble d'unités d'acquisition de données de capteurs délivrant chacune des données de capteurs sous forme numérique,
- une unité de traitement des données de capteurs (30) configurée pour exploiter les données numériques délivrées par ledit ensemble d'unités d'acquisition et élaborer un vecteur d'état de la dynamique du véhicule,
et dans lequel l'ensemble d'unités d'acquisition de données de capteurs comprend:
∘ une unité d'acquisition et de numérisation de signaux GNSS (20) comprenant une structure d'antenne (RA) configurée pour recevoir des signaux GNSS et un convertisseur analogique-numérique (2) couplé à la structure d'antenne et configuré pour délivrer les signaux GNSS sous forme numérique à l'unité de traitement de données de capteurs,
**caractérisé en ce que** l'ensemble d'unités d'acquisition de données de capteurs comprend également:
∘ une unité de mesure inertielle (6) intégrée au sein de l'unité de traitement des données de capteurs (30), configurée pour délivrer sous forme numérique à l'unité de traitement de données de capteurs des données inertielles issues de capteurs inertiels.

2. Système selon la revendication 1, dans lequel l'ensemble d'unités d'acquisition de données de capteurs comprend en outre une unité d'acquisition et de numérisation de données issues de capteurs de données aérodynamiques (40), l'unité de traitement des données de capteurs exploitant également lesdites données aérodynamiques pour élaborer le vecteur d'état de la dynamique du véhicule.

3. Système selon l'une des revendications 1 ou 2, dans lequel l'unité de traitement des données de capteurs est également configurée pour mettre en oeuvre un traitement adaptatif spatio-temporel ou spatio-fréquentiel des signaux GNSS délivrés par le module d'acquisition et de numérisation de signaux GNSS.

4. Système selon l'une des revendications 1 à 3, dans lequel la structure d'antenne est formée d'un réseau d'antennes à diagramme de rayonnement contrôlable, et dans lequel l'unité de traitement des données de capteurs est également configurée pour mettre en oeuvre une recombinaison des signaux GNSS issues de chacune des antennes du réseau.

5. Système selon la revendication 4, dans lequel l'unité de traitement des données de capteurs utilise en outre les données inertielles délivrées par l'unité de mesure inertielle pour déterminer la direction des satellites observables dans le repère de la structure d'antenne et le gain de la structure d'antenne est modifiée dans les directions ainsi déterminées.

6. Système selon l'une des revendications 4 ou 5, dans lequel l'unité de traitement des données de capteurs corrige les signaux GNSS délivrés par l'unité d'acquisition et de numérisation de signaux GNSS sur la base de l'incohérence des différences de phase et de pseudo distance entre chaque antenne du réseau.

7. Système selon l'une des revendications 1 à 6, dans lequel l'unité de traitement des données de capteurs est également configurée pour mettre en oeuvre au moins un traitement d'hybridation des données délivrées par les différentes unités de l'ensemble d'unités d'acquisition de données de capteurs pour élaborer le vecteur d'état de la dynamique du véhicule.

8. Système selon l'une des revendications 1 à 7, comprenant une pluralité d'unités de traitement des données de capteurs, et dans lequel l'unité d'acquisition et de numérisation de signaux GNSS délivre les signaux GNSS sous forme numérique à plusieurs unités de la pluralité d'unités de traitement des données de capteurs.

9. Système selon l'une des revendications 1 à 8, comprenant une pluralité d'unités de traitement des données de capteurs, et dans lequel l'unité de mesure inertielle délivre les données inertielles à plusieurs unités de la pluralité d'unités de traitement des données de capteurs.

## Patentansprüche

1. Trägheits-/GNSS-Navigationssystem, das einem Fahrzeug zugeordnet ist, umfassend:
- eine Gruppe von Erfassungseinheiten von Sensordaten, von denen jede Sensordaten in digitaler Form bereitstellt,
- eine Verarbeitungseinheit der Sensordaten (30), die konfiguriert ist, um die von der Gruppe von Erfassungseinheiten bereitgestellten digitalen Daten auszuwerten und einen Zustandsvektor der Dynamik des Fahrzeugs zu ermitteln,
und wobei die Gruppe von Erfassungseinheiten von Sensordaten umfasst:
∘ eine Erfassungs- und Digitalisierungseinheit von GNSS-Signalen (20), umfassend eine Antennenstruktur (RA), die konfiguriert ist, um GNSS-Signale zu empfangen, und einen Analog-Digital-Wandler (2), der an die Antennenstruktur gekoppelt und konfiguriert ist, um die GNSS-Signale der Verarbeitungseinheit von Sensordaten in digitaler Form bereitzustellen,
**dadurch gekennzeichnet, dass** die Gruppe von Erfassungseinheiten von Sensordaten ebenfalls umfasst:
o eine in die Verarbeitungseinheit der Sensordaten (30) integrierte Trägheitsmesseinheit (6), die konfiguriert ist, um der Verarbeitungseinheit von Sensordaten Trägheitsdaten von Trägheitssensoren in digitaler Form bereitzustellen.

2. System nach Anspruch 1, wobei die Gruppe von Erfassungseinheiten von Sensordaten ferner eine Erfassungs- und Digitalisierungseinheit von Daten umfasst, die von Sensoren aerodynamischer Daten (40) stammen, wobei die Verarbeitungseinheit der Sensordaten ebenfalls aerodynamische Daten auswertet, um den Zustandsvektor der Dynamik des Fahrzeugs zu ermitteln.

3. System nach einem der Ansprüche 1 oder 2, wobei die Verarbeitungseinheit der Sensordaten ebenfalls konfiguriert ist, um eine räumlich-zeitliche oder räumlich-frequentielle adaptive Verarbeitung der GNSS-Signale durchzuführen, die von dem Erfassungs- und Digitalisierungsmodul von GNSS-Signalen bereitgestellt wurden.

4. System nach einem der Ansprüche 1 bis 3, wobei die Antennenstruktur von einem Antennennetzwerk mit kontrollierbarem Strahlungsdiagramm gebildet ist, und wobei die Verarbeitungseinheit der Sensordaten ebenfalls konfiguriert ist, um eine Rekombination der von jeder der Antennen des Netzwerks ausgegebenen GNSS-Signale durchzuführen.

5. System nach Anspruch 4, wobei die Verarbeitungseinheit der Sensordaten ferner die von der Trägheitsmesseinheit bereitgestellten Trägheitsdaten verwendet, um die Richtung der im Bezugssystem der Antennenstruktur beobachtbaren Satelliten zu bestimmen und die Ausbeute der Antennenstruktur in den derart bestimmten Richtungen modifiziert ist.

6. System nach einem der Ansprüche 4 oder 5, wobei die Verarbeitungseinheit der Sensordaten die von der Erfassungs- und Digitalisierungseinheit von GNSS-Signalen bereitgestellten GNSS-Signale auf der Basis der Inkohärenz der Phasen- und Pseudodistanzdifferenzen zwischen jeder Antenne des Netzwerks korrigiert.

7. System nach einem der Ansprüche 1 bis 6, wobei die Verarbeitungseinheit der Sensordaten ebenfalls konfiguriert ist, um mindestens eine Hybridationsverarbeitung der von den verschiedenen Einheiten der Gruppe von Erfassungseinheiten von Sensordaten bereitgestellten Daten durchzuführen, um den Zustandsvektor der Dynamik des Fahrzeugs zu ermitteln.

8. System nach einem der Ansprüche 1 bis 7, umfassend eine Vielzahl von Verarbeitungseinheiten der Sensordaten, und wobei die Erfassungs- und Digitalisierungseinheit von GNSS-Signalen die GNSS-Signale in digitaler Form mehreren Einheiten der Vielzahl von Verarbeitungseinheiten der Sensordaten bereitstellt.

9. System nach einem der Ansprüche 1 bis 8, umfassend eine Vielzahl von Verarbeitungseinheiten der Sensordaten, und wobei die Trägheitsmesseinheit die Trägheitsdaten mehreren Einheiten der Vielzahl von Verarbeitungseinheiten der Sensordaten bereitstellt.

## Claims

1. An inertia/GNSS navigation system linked to a vehicle, comprising:
- a set of acquisition units of sensor data each delivering sensor data in digital form,
- a unit for processing sensor data (30) configured to exploit digital data delivered by said set of acquisition units and to calculate a status vector of the dynamics of the vehicle,
and wherein the set of acquisition units of sensor data comprises:
∘ a unit for acquiring and digitising GNSS signals (20) comprising an antenna structure (RA) configured to receive GNSS signals and an analog-digital converter (2) coupled to the antenna structure and configured to deliver the GNSS signals in digital form to the unit for processing sensor data,
**characterised in that** the set of acquisition units of sensor data also comprises:
∘ an inertial measuring unit (6) integrated within the unit for processing sensor data (30), configured to deliver inertial data originating from inertial sensors in digital form to the unit for processing sensor data.

2. The system according to claim 1, wherein the set of acquisition units of sensor data further comprises a unit for acquiring and digitising data originating from aerodynamic sensors of data (40), the unit for processing sensor data also exploiting said aerodynamic data to calculate the status vector of the dynamics of the vehicle.

3. The system according to one of claims 1 or 2, wherein the unit for processing sensor data is also configured to execute adaptive spatio-temporal or spatio-frequential processing of the GNSS signals delivered by the acquisition and digitising module of GNSS signals.

4. The system according to one of claims 1 to 3, wherein the antenna structure is formed by a network of antennae with controllable radiation pattern, and wherein the unit, for processing sensor data is also configured to execute recombination of the GNSS signals originating from each of the antennae of the network.

5. The system according to claim 4, wherein the unit for processing sensor data further uses inertial data delivered by the inertial measuring unit to determine the direction of satellites observable in the marker of the antenna structure and the gain of the antenna structure is modified in the directions thus determined.

6. The system according to one of claim 4 or 5, wherein the unit for processing sensor data corrects the GNSS signals delivered by the acquisition and digitising unit of GNSS signals on the basis of incoherence of differences in phase and pseudo-distance between each antenna of the network.

7. The system according to one of claims 1 to 6, wherein the unit for processing sensor data is also configured to execute at least hybridisation processing of data delivered by the various units of the set of acquisition units of sensor data to calculate the status vector of the dynamics of the vehicle.

8. The system according to one of claims 1 to 7, comprising a plurality of units for processing sensor data, and wherein the acquisition and digitising unit of GNSS signals delivers GNSS signals in digital form to several units of the plurality of units for processing sensor data.

9. The system according to one of claims 1 to 8, comprising a plurality of units for processing sensor data, and wherein the inertial measuring unit delivers inertial data to several units of the plurality of units for processing sensor data.
